# EUROPEAN PATENT APPLICATION

(11) **EP 3 675 468 A1**
(43) Date of publication of application: **01.07.2020**
(21) Application number: 18856471.0
(22) Date of filing: 11.04.2018
(51) Int. Cl.: H04M 1/02, H04M 1/725, G06F 1/16, G06F 3/14

(54) **DISPLAY SCREEN SWITCHING METHOD AND MOBILE TERMINAL**

(30) Priority: 14.09.2017 CN 201710828321
(71) Applicant: ZTE Corporation, Shenzhen, Guangdong 518057 (CN)
(72) Inventor: QIAN, Jiangchao, Shenzhen Guangdong 518057 (CN); FU, Min, Shenzhen Guangdong 518057 (CN)
(74) Representative: Baudler, Ron
(86) International application number: PCT/CN2018/082698
(87) International publication number: WO 2019/052166

(57) **Abstract**

The present disclosure discloses a display screen switching method and a mobile terminal. The method is applied to a mobile terminal configured with two display screens, and includes: obtaining position change information of a detected display screen, the detected display screen including either of the two display screens; calculating a flip angle and a flip angular velocity of the detected display screen according to the position change information; and switching, when the flip angle meets a preset switching angle and the flip angular velocity meets a preset switching angular velocity, content currently displayed on a first display screen of the two display screens to a second display screen of the two display screens for display.

## Description

### TECHNICAL FIELD

The present disclosure relates to the field of mobile communication technologies, and in particular, to a display screen switching method and a mobile terminal.

### BACKGROUND

With the continuous development of the manufacturing technology of mobile terminals, mobile terminals provided with a plurality of display screens are more widely used, among which, double-sided display terminals with display screens on both a front side and a back side of the mobile terminal are particularly popular with consumers. However, in use of the conventional double-sided display terminal, especially for a mobile terminal provided with an android operating system, display screen switching is achieved by setting a display mode, which is cumbersome to operate and inconvenient to use.

### SUMMARY

According to an aspect of the present disclosure, there is provided a display screen switching method, which is applied to a mobile terminal configured with two display screens and includes: obtaining position change information of a detected display screen, the detected display screen including either of the two display screens; calculating a flip angle and a flip angular velocity of the detected display screen according to the position change information; and switching, when the flip angle meets a preset switching angle and the flip angular velocity meets a preset switching angular velocity, content currently displayed on a first display screen of the two display screens to a second display screen of the two display screens for display.

According to another aspect of the present disclosure, there is provided a mobile terminal, including: a position change information obtaining module configured to obtain position change information of a detected display screen, the detected display screen including either of the two display screens; a flip information calculation module configured to calculate a flip angle and a flip angular velocity of the detected display screen according to the position change information; and a display screen switching module configured to switch, when the flip angle meets a preset switching angle and the flip angular velocity meets a preset switching angular velocity, content currently displayed on a first display screen of the two display screens to a second display screen for display.

According to another aspect of the present disclosure, there is provided a computer storage medium storing a computer program thereon, the computer program being configured to cause the display screen switching method of the disclosure to be implemented.

The above description is merely an overview of the technical solutions of the present disclosure, and for better clarity of the technical means of the present disclosure so that the present disclosure can be implemented in accordance with the content of the description, and for better understanding of the above and other objects, features and advantages of the present disclosure, the specific embodiments of the present disclosure are recited below.

### BRIEF DESCRIPTION OF THE DRAWINGS

Various other advantages and benefits will become apparent to those ordinary skilled in the art from reading the following detailed description of preferred embodiments. The drawings are only provided for the purpose of illustrating the preferred embodiments and are not to be construed as limiting thereto. Throughout the drawings, the same reference numbers represent the same components. In the drawings:
FIG. 1 is a flowchart of a display screen switching method according to Embodiment 1 of the present disclosure;
FIG. 2 is a flowchart of a display screen switching method according to Embodiment 2 of the present disclosure;
FIG. 3 is a schematic diagram illustrating judging and detecting a flip angle of the detected display screen in the display screen switching method according to Embodiment 2 of the present disclosure;
FIG. 4 is a flowchart of a display screen switching method according to Embodiment 3 of the present disclosure; and
FIG. 5 is a schematic structural diagram of a mobile terminal according to Embodiment 4 of the present disclosure.

### DETAILED DESCRIPTION

Exemplary embodiments of the present disclosure will be described in more detail below with reference to the accompanying drawings. While exemplary embodiments of the disclosure are shown in the drawings, it should be understood that the disclosure may be embodied in various forms and should not be limited to the embodiments set forth herein. Rather, these embodiments are provided so that this disclosure will be thoroughly understood, and will fully convey the scope of the disclosure to those skilled in the art.

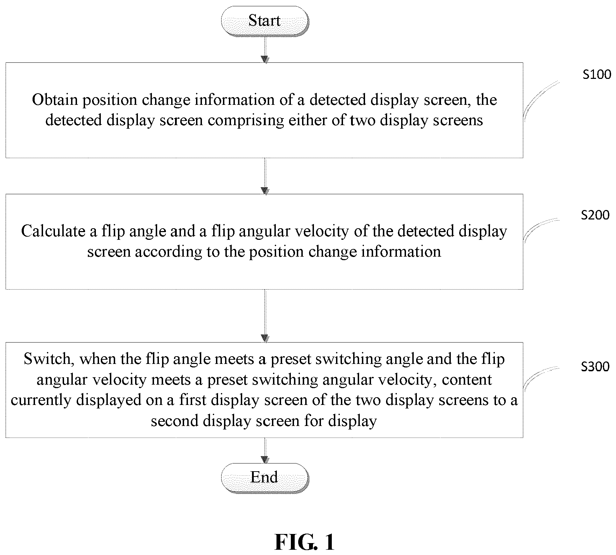

FIG. 1 is a flowchart of a display screen switching method in Embodiment 1 according to the present disclosure. As shown in FIG. 1, the display screen switching method according to Embodiment 1 includes the following steps.

At step 100, position change information of a detected display screen is obtained, the detected display screen including either of two display screens.

The detected display screen defined herein may be a display screen on which content is currently displayed, or may be a display screen on which content is not currently displayed. The position information of only one display screen on one mobile terminal is detected and used for calculating the position change information, and the implementation method is simple and reliable.

In an example, the two display screens are a front display screen disposed on a front side of the mobile terminal and a back display screen disposed on a back side of the mobile terminal.

The step of obtaining the position change information of the detected display screen includes obtaining position change information of the detected display screen after a position change through a sensor configured in the mobile terminal. The sensor includes, but is not limited to, at least one of a gravity sensor, an angle sensor, an angular velocity sensor, and a geomagnetic sensor.

At step 200, a flip angle and a flip angular velocity of the detected display screen are calculated according to the position change information.

The position change of the mobile terminal includes flip, rotation, horizontal movement, vertical movement, and the like. Then, it is judged whether display screen switching is needed according to the detected position change of the mobile terminal. If the mobile terminal is flipped, the display screen needs to be switched. If the detected position change of the mobile terminal itself is a horizontal or vertical movement, the display screen does not need to be switched. For example, in actual use, when the flip angle of the mobile terminal meets a preset switching angle, it can be determined that the mobile terminal needs to switch the display screen. The preset switching angle is set according to actual requirements. In an example, meeting the preset switching angle means that the flip angle reaches 180°; in another example, meeting the preset switching angle means that the flip angle is greater than 160°; and in yet another example, meeting the preset switching angle means that the flip angle is greater than 160° and less than 200°.

During the flip of the mobile terminal, besides the flip angle, a flip angular velocity also needs to be judged. When the flip angular velocity of the mobile terminal is high enough, a user operating the mobile terminal may be considered to have actively flipped the mobile terminal rapidly, and thus the display screen needs to be switched.

At step 300, when the flip angle meets a preset switching angle and the flip angular velocity meets a preset switching angular velocity, content currently displayed on a first display screen of the two display screens is switched to a second display screen of the two display screens for display.

When the flip angle and the flip angular velocity both meet the preset switching conditions, the mobile terminal is considered to be flipped to an angle requiring switching the display screen by one flipping action, so that the screen switching may be performed.

In the display screen switching method of this embodiment, when a position change of the detected display screen is detected, a flip angle and a flip angular velocity of the detected display screen are calculated according to the position change information before and after the position change, and when the flip angle and the flip angular velocity both meet the preset switching conditions, a display screen of the mobile terminal that is currently displaying content is switched to the other (that is, content currently displayed on one display screen is switched to the other for display). According to the display screen switching method of the embodiment, various sensors configured in the mobile terminal may be used for detection of the position change, and the detected position change information may be used for switching the current display screen so that the mobile terminal can automatically switch the display screen according to the position change of the mobile terminal itself in a simple and reliable implementation manner.

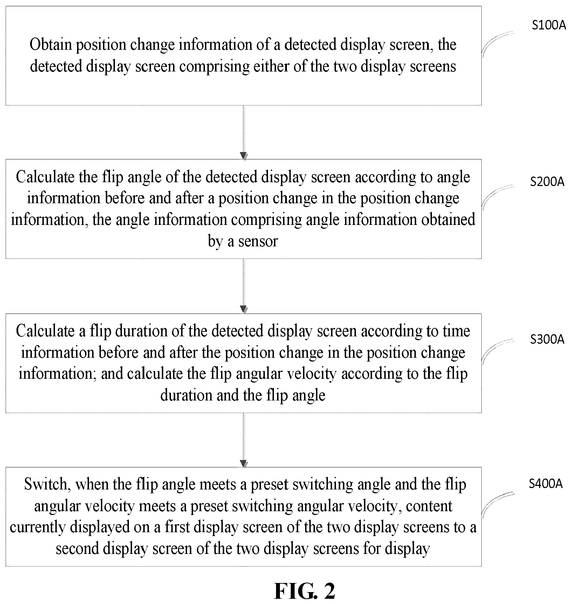

FIG. 2 is a flowchart of a display screen switching method according to Embodiment 2 of the present disclosure. As shown in FIG. 2, the display screen switching method in Embodiment 2 includes the following steps.

At step 100A, position change information of a detected display screen is obtained, the detected display screen including either of two display screens.

This obtaining step is the same as step 100 in Embodiment 1.

At step 200A, a flip angle of the detected display screen is calculated according to angle information before and after a position change in the position change information, the angle information including angle information obtained by a sensor.

The step of obtaining the angle information by the sensor includes: obtaining angle information of the detected display screen relative to a horizontal plane by a sensor (such as an angle sensor, a geomagnetic sensor, an angular velocity sensor or a combination thereof) configured in the mobile terminal, and calculating the flip angle of the display screen according to the angle information before and after the position change.

At step 300A, a flip duration of the detected display screen is calculated according to time information before and after the position change in the position change information, and the flip angular velocity is calculated according to the flip duration and the flip angle.

Since the flip angular velocity is further to be calculated, a flip duration of the flipping action is calculated based on the flip angle calculated in step 200A and according to the time information before and after the position change in the position change information, and then the flip angular velocity is calculated according to the flip duration and the flip angle. For example, the flip angular velocity may be an average velocity obtained by dividing the flip angle by the flip duration.

At step 400A, when the flip angle meets a preset switching angle and the flip angular velocity meets a preset switching angular velocity, the content currently displayed on a first display screen is switched to a second display screen for display.

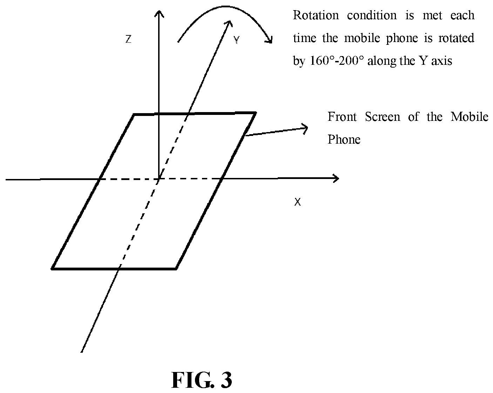

This is the same as step 300 in Embodiment 1. As shown in FIG. 3, in an X-Y coordinate system established on the detected display screen, the X axis and the Y axis may or may not be parallel to the frame, respectively (FIG. 3 shows a case where the X axis and the Y axis are parallel to the frame, respectively). The original front screen faces a positive direction of the Z axis, and when the mobile terminal is flipped, the back screen will face the positive direction of the Z axis. In the example of FIG. 3, when the mobile terminal is flipped between 160° and 200° along the Y-axis, it is considered that the user of the mobile terminal (e.g., a mobile phone) makes an action to flip the front and screens for one time, and this action is considered as a condition for switching the display screen.

Similar to Embodiment 1, according to the display screen switching method of this embodiment, various sensors provided in the mobile terminal may be used for detection of the position change, and the detected position change information may be used for switching the current display screen so that the mobile terminal can automatically switch the display screen according to the position change of the mobile terminal itself in a simple and reliable implementation manner.

In an example of the embodiment, the flip angle meeting a preset switching angle and the flip angular velocity meeting a preset switching angular velocity includes a case where the flip angle is greater than a preset first switching angle, and the flip angular velocity is greater than a preset switching angular velocity.

The judgment condition given in this example means satisfying both that the flip angle is greater than the first switching angle and the flip angular velocity is greater than the switching angular velocity, where the first switching angle includes 160° and the switching angular velocity includes 40°/s.

In another example of the embodiment, the flip angle meeting a preset switching angle and the flip angular velocity meeting a preset switching angular velocity includes a case where the flip angle is greater than a preset first switching angle and less than a preset second switching angle, and the flip angular velocity is greater than the preset switching angular velocity, the second switching angle being greater than the first switching angle.

The judgment condition given in this example is that when it is determined that the detected display screen is flipped, the flip angle needs to meet a set range of switching angles, while the flip angular velocity is greater than the switching angular velocity. The first switching angle includes 160°, the second switching angle includes 200°, and the switching angular velocity includes 40°/s. That is, the display screen is switched when the flip angle is between 160° and 200° and, at the same time, the flip angular velocity is greater than 40°/s.

In another example of the embodiment, in step 400A, when the flip angle meets a preset switching angle and the flip angular velocity meets a preset switching angular velocity, a preset time period elapses until a current flip angle of the detected display screen meets the preset switching angle, and then the content currently displayed on the first display screen is switched to the second display screen for display.

In this example, the purpose of judging again after waiting is to confirm, after the flip angle meets the preset switching angle (e.g., the flip angle is between 160° and 200°), whether the mobile terminal is flipped out of the preset switching angle (e.g., the flip angle then is greater than 200° or less than 160°) after a preset time period. If the flip angle of the mobile terminal still meets the preset switching angle after the preset time period, it is determined that the user indeed made an action to flip the front and back screens, and thus screen switching may be performed.

Based on the above examples of the embodiment, the mobile terminal can automatically switch the display screen according to the position change of the mobile terminal itself in a simple, accurate and reliable implementation manner.

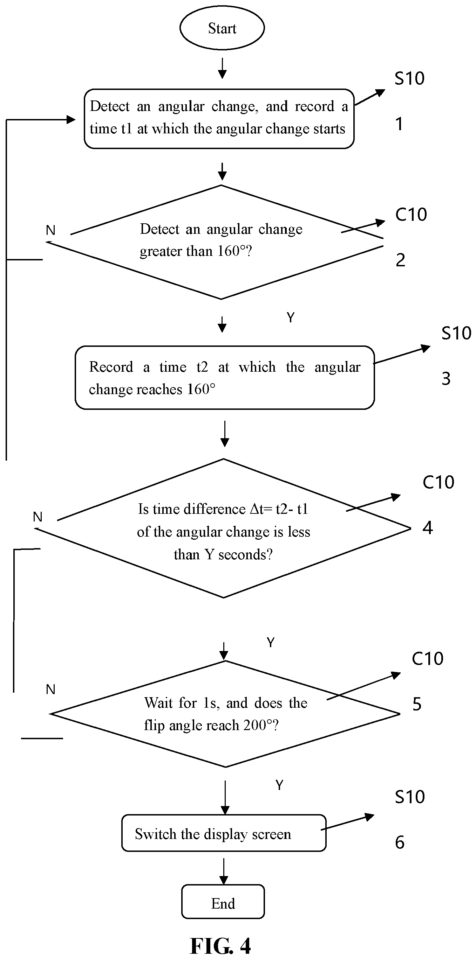

FIG. 4 is a flowchart of a display screen switching method in Embodiment 3 of the present disclosure. As shown in FIG. 4, the display screen switching method in Embodiment 3 includes the following steps.

At step S101, an angular change is detected and calculated, and a time t1 at which an angular change starts is recorded.

Various sensors may be used to directly calculate angular change information of the detected display screen. The detection method proposed in this embodiment includes periodically detecting changes in the angle and continuing the detection if no change is detected, and recording, when a change is detected, a time t1 at which the change starts for later judgement of the flip angular velocity.

At step C102: the angular change is detected and whether the angular change is greater than 160° is judged.

It is judged whether the detected angular change meets the prerequisite condition, i.e., 160°, of flipping the mobile phone, and if so, proceed to the next step S103.

At step S103, a time t2 at which the angular change reaches 160° is recorded.

A time at which the mobile phone is flipped by the angle is recorded. Then, proceed to step C104 after recording the time to judge whether the angular velocity requirement is met.

At step C104: it is judged whether a time difference Δt= t2- t1 of the angular change is less than Y seconds.

In an example, Y is 4. A duration required to flip the mobile phone from 0° to 160° is calculated. Since the preset flip angular velocity is 40°/s, the step C105 may be carried out when the time Δt is less than 4 seconds, which meets the requirements; otherwise, return to step S101 to detect again. In other examples, Y may take other values, such as 3, depending on the preset flip angular velocity and flip angle.

At step C105: after Z seconds, it is judged whether the flip angle does not reach 200°.

In an example, Z is 1. Wait until the flip action of the mobile phone is ended, because the operation of the user may be not meant to flip the mobile phone, but flip the mobile phone for more than 200°. The reason for waiting for 1 second is that the required angular velocity of the mobile phone is 40°/s, and flipping from 160° to 200° takes a maximum time of 1 second. If the final angle by which the mobile phone is flipped is between 160° and 200°, the user operation is considered as flipping the mobile phone, and then step S106 is carried out; otherwise, return to S101 to detect again. In other examples, Z may take other values, such as 0.5, depending on the preset flip angular velocity and flip angle ranges.

At step S106: the display screen is switched.

After the action of flipping the mobile phone by the user is determined, the display screen is switched, i.e., the currently lighted screen is turned off and the other screen is lighted.

According to the display screen switching method of the embodiment, various sensors configured in the mobile terminal may be used for periodic detection of the position change, and the detected position change information may be used for switching the current display screen so that the mobile terminal can automatically switch the display screen according to the position change of the mobile terminal itself in a simple and reliable implementation manner.

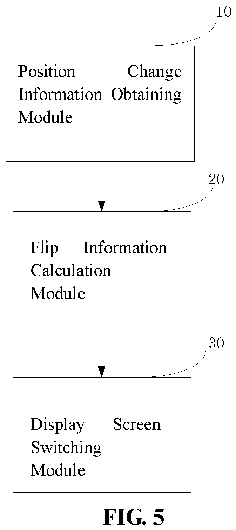

FIG. 5 is a schematic structural diagram of a mobile terminal according to Embodiment 4 of the present disclosure. The mobile terminal in Embodiment 4 shown in FIG. 5 is provided with two display screens, and includes a position change information obtaining module 10, a flip information calculation module 20 and a display screen switching module 30.

The position change information obtaining module 10 is configured to obtain position change information of a detected display screen, the detected display screen including either of the two display screens.

The flip information calculation module 20 is configured to calculate a flip angle and a flip angular velocity of the detected display screen according to the position change information. The flip information calculation module 20 may include: a flip angle calculation unit configured to calculate the flip angle of the detected display screen according to angle information before and after a position change in the position change information, the angle information including angle information obtained by a sensor; and a flip angular velocity calculation module configured to calculate a flip duration of the detected display screen according to time information before and after the position change in the position change information, and calculate the flip angular velocity according to the flip duration and the flip angle.

The display screen switching module 30 is configured to switch, when the flip angle meets a preset switching angle and the flip angular velocity meets a preset switching angular velocity, content currently displayed on a first display screen of the two display screens to a second display screen of the two display screens for display. In an example, the flip angle meeting a preset switching angle and the flip angular velocity meeting a preset switching angular velocity includes a case where the flip angle is greater than a preset first switching angle, and the flip angular velocity is greater than a preset switching angular velocity. In another example, the flip angle meeting a preset switching angle and the flip angular velocity meeting a preset switching angular velocity includes a case where the flip angle is greater than a preset first switching angle and less than a preset second switching angle, and the flip angular velocity is greater than the preset switching angular velocity, the second switching angle being greater than the first switching angle. In yet another example, the display screen switching module is further configured to: wait, when the flip angle meets the preset switching angle and the flip angular velocity meets the preset switching angular velocity, for a preset time period until a current flip angle of the detected display screen meets the preset switching angle, and then switch the content currently displayed on the first display screen to the second display screen for display.

In the mobile terminal provided in this embodiment, when a position change of the detected display screen is detected, a flip angle and a flip angular velocity of the detected display screen are calculated according to the position change information before and after the position change, and when the flip angle and the flip angular velocity both meet the preset switching conditions, a display screen of the mobile terminal that is currently displaying content is switched to the other. In the present disclosure, various sensors configured in the mobile terminal may be used for detection of the position change, and the detected position change information may be used for switching the current display screen so that the mobile terminal can automatically switch the display screen according to the position change of the mobile terminal itself in a simple and reliable implementation manner.

Those of ordinary skill in the art will appreciate that all or part of the steps in the various methods of the above embodiments may be implemented by a program instructing related hardware stored in a computer readable storage medium, wherein the storage medium may include: an ROM, an RAM, a magnetic or optical disk, and the like.

The above described embodiments are for illustrative purposes only and are not intended to limit the scope of the present disclosure. Any amendments, equivalent substitutions, improvements, etc. within the principle of the disclosure are all included in the scope of the protection defined by the appended claims of the disclosure.

For example, it may be understood by those of ordinary skill in the art that the mobile terminal in the above embodiments is not limited to a dual-screen mobile phone, but may be other types of mobile terminals such as a tablet, an electronic book, a portable game machine, a robot, and the like, which are configured with two screens.

Further, although in the above described embodiments, the display screens respectively provided on the front and back sides of the mobile terminal are taken as an example of the two display screens, the arrangement positions of the two display screens are not limited thereto. For example, the two display screens may be respectively provided on two sides of the mobile terminal that intersect (e.g., perpendicular to) each other, or on two portions of the mobile terminal that are connected to each other via a rotation shaft. In the latter case, for example, the two display screens may be flipped via the rotation shaft from a back-to-back state to the same plane.

## Claims

1. A display screen switching method, applied to a mobile terminal provided with two display screens, comprising
obtaining position change information of a detected display screen, the detected display screen comprising either of the two display screens;
calculating a flip angle and a flip angular velocity of the detected display screen according to the position change information; and
switching, when the flip angle meets a preset switching angle and the flip angular velocity meets a preset switching angular velocity, content currently displayed on a first display screen of the two display screens to a second display screen of the two display screens for display.

2. The display screen switching method according to claim 1, wherein the two display screens comprise:
a front display screen and a back display screen.

3. The display screen switching method according to claim 1 or 2, wherein the step of calculating the flip angle of the detected display screen according to the position change information comprises:
calculating the flip angle of the detected display screen according to angle information before and after a position change in the position change information, the angle information comprising angle information obtained by a sensor.

4. The display screen switching method according to claim 3, wherein the step of calculating the flip angular velocity of the detected display screen according to the position change information comprises:
calculating a flip duration of the detected display screen according to time information before and after the position change in the position change information, and
calculating the flip angular velocity according to the flip duration and the flip angle.

5. The display screen switching method according to any one of claims 1 to 4, wherein the flip angle meeting a preset switching angle and the flip angular velocity meeting a preset switching angular velocity comprises a case where:
the flip angle is greater than a preset first switching angle, and the flip angular velocity is greater than the preset switching angular velocity.

6. The display screen switching method according to any one of claims 1 to 4, wherein the flip angle meeting a preset switching angle and the flip angular velocity meeting a preset switching angular velocity comprises a case where:
the flip angle is greater than a preset first switching angle and less than a preset second switching angle, and the flip angular velocity is greater than the preset switching angular velocity, the second switching angle being greater than the first switching angle.

7. The display screen switching method according to any one of claims 1 to 6, wherein
under the condition that the flip angle meets the preset switching angle and the flip angular velocity meets the preset switching angular velocity, a preset time period elapses, and when a current flip angle of the detected display screen meets the preset switching angle, the content currently displayed on the first display screen is switched to the second display screen for display.

8. A mobile terminal provided with two display screens, comprising:
a position change information obtaining module configured to obtain position change information of a detected display screen, the detected display screen comprising either of the two display screens;
a flip information calculation module configured to calculate a flip angle and a flip angular velocity of the detected display screen according to the position change information; and
a display screen switching module configured to switch, when the flip angle meets a preset switching angle and the flip angular velocity meets a preset switching angular velocity, content currently displayed on a first display screen of the two display screens to a second display screen for display.

9. The mobile terminal according to claim 8, wherein the two detected display screens comprise:
a front display screen and a back display screen.

10. The mobile terminal according to claim 8 or 9, wherein the flip information calculation module comprises:
a flip angle calculation unit configured to calculate the flip angle of the detected display screen according to angle information before and after a position change in the position change information, the angle information comprising angle information obtained by a sensor.

11. The mobile terminal according to claim 10, wherein the flip information calculation module further comprises:
a flip angular velocity calculation module configured to calculate a flip duration of the detected display screen according to time information before and after the position change in the position change information; and calculate the flip angular velocity according to the flip duration and the flip angle.

12. The mobile terminal according to any one of claims 8 to 11, wherein the flip angle meeting a preset switching angle and the flip angular velocity meeting a preset switching angular velocity comprises a case where:
the flip angle is greater than a preset first switching angle, and the flip angular velocity is greater than the preset switching angular velocity.

13. The mobile terminal according to any one of claims 8 to 11, wherein the flip angle meeting a preset switching angle and the flip angular velocity meeting a preset switching angular velocity comprises a case where:
the flip angle is greater than a preset first switching angle and less than a preset second switching angle, and the flip angular velocity is greater than the preset switching angular velocity, the second switching angle being greater than the first switching angle.

14. The mobile terminal according to any one of claims 8 to 13, wherein the display screen switching module is further configured to: wait, under the condition that the flip angle meets the preset switching angle and the flip angular velocity meets the preset switching angular velocity, for a preset time period, and when a current flip angle of the detected display screen meets the preset switching angle, switch the content currently displayed on the first display screen to the second display screen for display.

15. A computer readable storage medium storing a computer program thereon, the computer program being configured to implement the display screen switching method according to any one of claims 1 to 7.
